# EUROPEAN PATENT SPECIFICATION

(11) **EP 2 282 928 B1**
(45) Date of publication and mention of the grant of the patent: **15.04.2015**
(21) Application number: 08873964.4
(22) Date of filing: 05.12.2008
(51) Int. Cl.: B62M 3/08

(54) **BICYCLE PEDAL**
FAHRRADPEDAL
PÉDALE DE BICYCLETTE

(30) Priority: 19.04.2008 US 46407
(43) Date of publication of application: 16.02.2011
(73) Proprietor: 3ax B.V., 1489 NC de Woude (NL)
(72) Inventor: VAN EIJK, Stefan Nicoley, NL-3734 CC Den Dolder (NL)
(74) Representative: Jansen, Cornelis Marinus
(86) International application number: PCT/NL2008/050774
(87) International publication number: WO 2009/128702

(56) References cited:
- EP-A- 0 485 956
- EP-A- 1 533 220
- WO-A-2004/098986
- FR-A- 2 661 651

## Description

### Field of the invention

The invention relates to a bicycle pedal. More in particular, the invention relates to a bicycle pedal comprising a pedal axle for connection to a crank of a bicycle, a pedal body comprising at least one actuation surface for actuating the pedal, and connection means, wherein the connection means connect the pedal body to the pedal axle, such that the pedal body, while cycling, can freely rotate with respect to the pedal axle about a first axis extending substantially parallel to the pedal axle, and a second axis extending substantially perpendicular to the pedal axle and substantially parallel to the actuation surface.

### Background of the invention

It is known that bicycle pedals are used for propelling a bicycle by rotating the pedal body, or a pair of opposed pedal bodies, using a foot, or feet, of a user. The foot thereto actuates the pedal at the actuation surface. A shoe may for instance stand on a flat actuation surface of the pedal body. The pedal body is rotatably mounted to the pedal axle that connects to the crank. In use the pedal axle is substantially parallel to the ground and the pedal body rotates with respect to the pedal axle about the first axis, allowing flexion and extension of the ankle joint, i.e. allowing the heel to move up or down with respect to the forefoot. This is a first degree of freedom offered to the foot by the pedal.

Further, usually the shoe rests upon the actuation surface of the pedal body, allowing the sole of the shoe to slide with respect to the actuation surface. Hence, the foot may invert or evert, i.e. rotate in a direction in which the lower leg extends, about a third axis extending substantially perpendicular to the actuation surface, allowing the heel to twist towards the bike or away from it. This helps the foot to follow its natural path and decreasing knee strain. This second degree of freedom is often referred to as "float". It will be appreciated that also pedals referred to as clipless bicycle pedals or automatic bicycle pedals, referring to pedals that have a locking mechanism that can securely engage the pedal to a cycling shoe, often provide this second degree of freedom.

When providing only the two degrees of freedom mentioned above, the foot is still forced into an orientation in which the sole of the shoe is parallel to the pedal axle. This forced orientation does not correspond to the biomechanics of the majority of cyclists (most people have a forefoot tilt, either varus or valgus), and is, therefore, accountable for many cycling-related injuries. Poor leg alignment during the pedal stroke, i.e. sideward movements of the knee joint, is often the result. Generally, this results in power loss and/or injury.

Products are available for allowing better leg alignment by adjusting a rotation of the foot about a longitudinal axis of the foot. This longitudinal axis of the foot corresponds to the second axis extending substantially perpendicular to the pedal axle and substantially parallel to the actuation surface. Such rotation about the second axis allows that the sole of the shoe need not be parallel to the pedal axle. For instance wedges can be placed between the shoe sole and pedal cleat or wedges can be placed directly under the forefoot in the shoe. These products, however, can not adapt to the momentary optimum orientation of the foot during pedal stroke, i.e. they may change the fixed angle between the pedal axle and the shoe sole, but the result will still be a fixed angle, although a better one.

Thus, there is a need for a pedal allowing alignment of the foot in three degrees of freedom, i.e. allowing inversion or eversion of the foot, and allowing tilt of the foot about the longitudinal axis of the foot during the pedal stroke.

One such pedal is known from FR 2 661 651. This known pedal comprises a self-aligning bearing that is placed in between the pedal axle and the pedal body. This pedal, however, has the problem of being inherently unstable, which may aggravate the risk of injuries rather than overcome it.

WO 2004/098986 A discloses a bicycle pedal according to the preamble of claim 1.

It is an object of the invention to provide a pedal allowing three degrees of freedom to the foot, while being more stable in use.

### Summary of the invention

The object of the invention is achieved in that a pedal is provided comprising a pedal axle for connection to a crank of a bicycle, a pedal body comprising at least one actuation surface for actuating the pedal, and connection means, wherein the connection means connect the pedal body to the pedal axle, such that the pedal body, while cycling, can freely rotate with respect to the pedal axle about a first axis extending substantially parallel to the pedal axle, and a second axis extending substantially perpendicular to the pedal axle and substantially parallel to the actuation surface, and wherein the second axis is located at a distance from, and in use above, the actuation surface.

This pedal allows the foot to rotate about the first axis, e.g. by rotation of the pedal body about the pedal axle. This pedal also allows the foot to rotate about the second axis, e.g. by use of a dedicated rotation mechanism as described below. This pedal also allows the foot to rotate about the third axis extending substantially perpendicular to the actuation surface, e.g. by the shoe sliding on the actuation surface or by rotation of the shoe with respect to a locking mechanism attached to the pedal body.

The inventor realised that the instability of the pedal of FR 2 661 651 may be caused by the fact that the force a user transmits to the pedal axle acts upon the actuation surface at a position above the second axis. The result is that the pedal body tilts to its maximum angle of tilt when force is applied to it. As long as the maximum angle of tilt has not been reached, the pedal body is in an unstable situation and is only maintained in its position by the muscles of the foot and leg of the user. In the pedal according to the invention, the second axis is located at a distance from, and in use above, the actuation surface. Hence, the pedal according to the invention is inherently more stable because the rotation about the second axis is substantially self-centering.

Preferably, the distance is between approximately 5 and 18 cm, preferably approximately 9 cm. Without wishing to be bound to any theory, it has been found that if the second axis, in use, approximately intersects the ankle joint, a stable pedal is obtained, in which the pedal body can still rotate freely about the second axis.

In an embodiment, the connection means connect the pedal body to the pedal axle, such that the pedal body, while cycling, can freely rotate with respect to the pedal axle about a third axis extending substantially perpendicular to the actuation surface. Hence, the pedal body can rotate about the third axis, allowing the foot to invert or evert during pedal stroke.

Thus the pedal is arranged such that, during pedal stroke, e.g. during cycling, the pedal body can freely rotate with respect to the pedal axle about the first axis, the pedal body can freely rotate with respect to the pedal axle about the second axis, and, optionally, the pedal body can freely rotate with respect to the pedal axle about the third axis. This provides the desired three degrees of freedom to the foot of the user of the pedal during pedal stroke. Preferably, the pedal is free from fixing means for fixing the rotation of the pedal body about the second axis. Thus, free rotation about the second axis is guaranteed.

Preferably, the pedal further comprises damping means for damping the rotation about the second axis. This provides the advantage that the pedal may freely rotate about the second axis, but that the speed of rotation is limited by the damping means. This further enhances the stability of the pedal.

In an embodiment, the damping means comprise a pair of opposed arcuate surfaces (for instance a first arcuate sliding surface and a second arcuate sliding surface) forming a slit therebetween, wherein the slit comprises a damping substance, such as a grease. Thus, the grease may limit the speed of movement of the first arcuate surface with respect to the second arcuate surface, hence damping the movement of the first arcuate surface with respect to the second arcuate surface. The first arcuate surface may de associated with the pedal body, while the second arcuate surface may be associated with the connection means. Preferably, the arcuate surfaces are, sections of, cylindrical or spherical surfaces.

Preferably, the damping means are arranged for allowing a rotation of the pedal body about the second axis with respect to the pedal axis at a translational velocity of the pedal body of 0.001 m/s - 0.015 m/s when a force of 10N is applied to the pedal body in a direction tangential to the direction of rotation about the second axis. It has been found that these translational velocities provide very good stability of the pedal.

Preferably, the bicycle pedal comprising a roller bearing construction for allowing the rotation about the second axis. Thereto, rollers may be interposed between a first arcuate surface and a second arcuate surface of the arcuate surfaces. This provides the advantage that easy actuation of the rotation about the second axis may be obtained. Also, a thickness of a film of the grease, if present, may be predetermined and maintained.

Preferably, the pedal body is designed as a sealed enclosure enclosing the connection means. This may protect the moving parts of the connection means against dust, dirt and/or moisture.

In an embodiment, the pedal body comprises a locking mechanism for securing the pedal to a cycling shoe. Hence, the pedal may be designed as a clipless bicycle pedal or automatic bicycle pedal.

The invention also relates to a bicycle comprising a pedal according to the invention. Herein bicycle is to be understood as any bicycle, such as a road bicycle, a mountainbike (also referred to as MTB or ATB), a BMX-bicycle, or a stationary training or exercise bicycle, such as for instance used for indoor sports like spinning.

### Brief description of the drawings

The invention will now be further elucidated by means of, nonlimiting, examples referring to the drawing, in which
Fig. 1a shows a schematic representation of an example of a pedal according to the invention;
Fig. 1b shows an exploded view of the example shown in Fig. 1a;
Fig. 1c shows a sectional view of the example shown in Figs 1a and 1b;
Fig. 2 shows a schematic representation of a second example of a pedal according to the invention;
Fig. 3 shows a schematic representation of a test set-up for determining damping;
Fig. 4 shows a schematic representation of a further embodiment of a pedal according to the invention; and
Figs. 5a and 5b show a schematic representation of a further embodiment of a pedal according to the invention.

### Detailed description of the invention

It will be appreciated that in normal use a bicycle has two pedals, a right pedal connected to the right crank and a left pedal connected to the left crank. Usually the left and right pedals are mirror images. In the following only one pedal will be described.

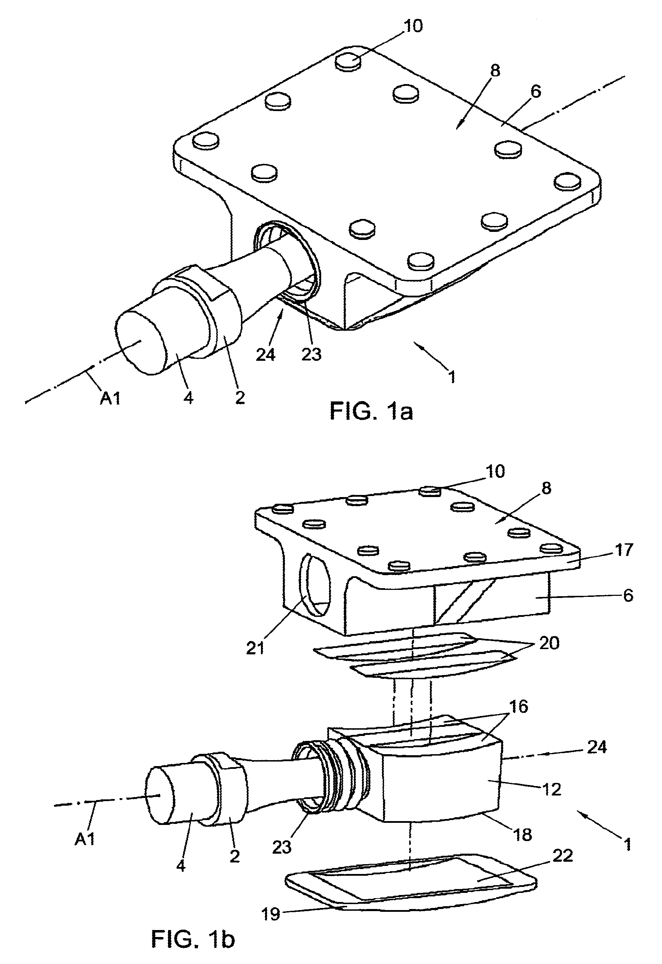

In Figs. 1a-1c a schematic representation of an example of a bicycle pedal 1 according to the invention is shown. The pedal 1 comprises a pedal axle 2. In this example the pedal axle 2 is provided with a threaded end portion 4. The threaded end portion 4 is arranged for connection to a crank of a bicycle.

In this example, the pedal 1 further comprises a pedal body 6. The pedal body 6 comprises at least one actuation surface 8 for actuating the pedal 1. In this example the actuation surface 8 is a flat surface which, in use, forms the top of the pedal body. It will be appreciated that the sole of a foot or shoe can be placed on top of the actuation surface 8 for actuating the pedal. In this example the actuation surface 8 comprises a plurality of bosses 10 for enhancing grip of the foot or shoe on the actuation surface 8.

In this example, the pedal 1 further comprises a connection body 12. The connection body 12 is rotatably connected to the pedal axle 2. In this example, the connection body 12 is connected to the pedal axle 2 via rotary bearings 14. Due to the rotatable connection, the connection body can freely rotate with respect to the pedal axle 2 about a first axis A₁ extending parallel to the pedal axle 2, in this example through the center of the pedal axle 2.

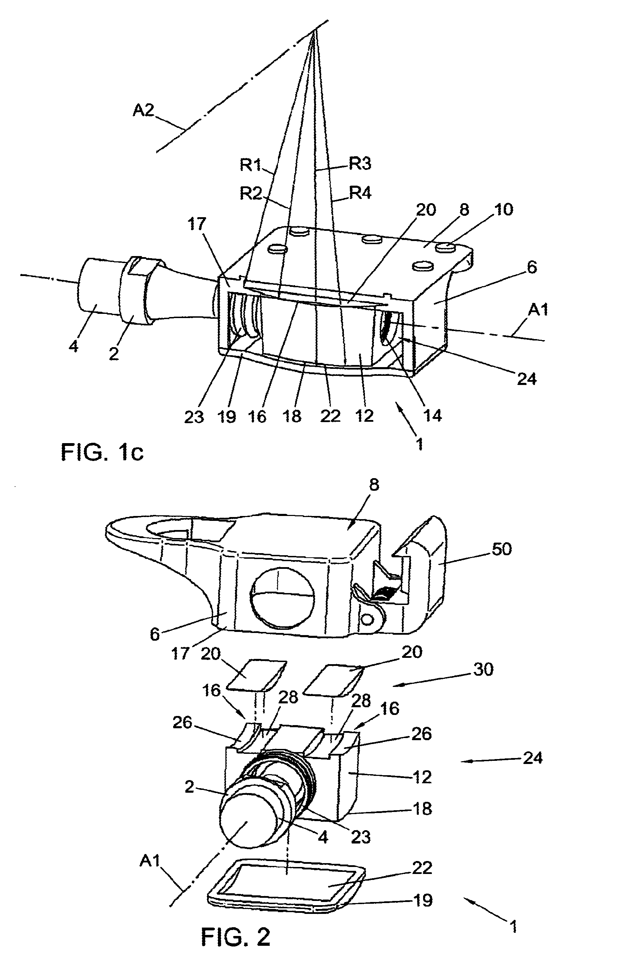

In this example, the connection body 12 comprises arcuate grooves 16. The connection body 16 further comprises an arcuate surface 18. The pedal body 6, in this example, comprises arcuate ridges 20, in Figs. 1b and 1c designed as separate inserts. The arcuate ridges 20 may, alternatively, be designed integral with the pedal body 6. The pedal body 6 further comprises an arcuate surface 22, in this example designed as the inner surface of a lid 19 of the pedal body 6. The arcuate ridges 20 are designed to cooperate with the arcuate grooves 16. Here the arcuate ridges 20 slidingly engage the arcuate grooves 16. The arcuate ridges 20 and arcuate grooves 16 form arcuate surfaces. The arcuate surfaces 16,20 and 18,22 here are surfaces forming part of cylindrical surfaces having a center axis corresponding to the second axis A₂, i.e. the center axis is positioned at a distance of, in use, above, the actuation surface 8.

In this example, a radius of curvature R₁ of the arcuate ridges 20 is substantially identical to a radius of curvature R₂ of the arcuate grooves 16. The arcuate ridges 20 and grooves 16 allow the pedal body 6 to rotate with respect to the pedal axle 2 about a second axis A₂ extending substantially perpendicular to the pedal axle 2 and substantially parallel to the actuation surface 8. In this example, a radius of curvature R₃ of the arcuate surface 18 is substantially identical to a radius of curvature R₄ of the arcuate surface 22. Further, the radius of curvature R₃,R₄ of the arcuate surfaces 18,22 is chosen such that the arcuate surface 22 of the pedal body 6 can rotate about the axis A₂.

It will be appreciated that the connection body 12, the arcuate grooves 16, the arcuate ridges 20 and the arcuate surfaces 18,22 in this example form connection means 24. More in general it applies that the connection means 24 connect the pedal body 6 to the pedal axle 2, such that the pedal body 6, during pedal stroke, can freely rotate with respect to the pedal axle about the first axis A₁ extending substantially parallel to the pedal axle 2, and the second axis A₂ extending substantially perpendicular to the pedal axle 2 and substantially parallel to the actuation surface 8.

From Figs. 1a-1c it will be clear that, in this example, the second axis A₂ is located at a distance from the actuation surface 8 in a direction away from the pedal axle 2. Thus the second axis A₂ is here located at a distance from, and in use above, the actuation surface 8. In this example, the distance is approximately 9 cm. More in general the distance is preferably between 5 and 18 cm. It has been found that at this distance, in use, the second axis A₂ substantially coincides with the ankle joint, which provides that the rotation of the pedal body 6 about the second axis A₂ conforms to natural ankle motion and provides a very stable pedal.

In the example shown in Figs. 1a-1c, the pedal body 6 is designed as a sealed enclosure. The enclosure in this example comprises a tray 17 of the pedal body 6 and the lid 19 of the pedal body 6. The connection body 12, the arcuate grooves 16, the arcuate ridges 20 and the arcuate surfaces 18,22, or more in general the connection means 24, in this example are enclosed within the enclosure. The pedal axle 2 extends from the connection body 12 outwardly of the enclosure, through a hole 21. The pedal 1 in this example comprises a flexible seal 23, here a rubber bellows, for sealing a gap between the perimeter of the hole 21 and the pedal axle 2. Thus, the enclosure is sealed against e.g. dust, dirt and moisture. This may improve a life time of the pedal, by preventing damage and or wear from objects and/or materials entering the enclosure enclosing movable parts of the pedal.

In a more elaborate embodiment, a grease is provided between the arcuate surfaces of the arcuate grooves 16 and the arcuate ridges 20 and/or between the arcuate surfaces 18 and 22. Preferably a high viscosity grease is used, so that the grease limits the speed of movement of the arcuate surfaces with respect to each other, and hence the rotational speed of the pedal body 6 with respect to the pedal axle 2 about the second axis A₂. A slit may be required between the arcuate surfaces for allowing a film of the grease to be present.

In an embodiment, an example of which is shown in Fig. 2, such slit has a predetermined, and in use constant, width, causing the film of the grease to maintain a constant thickness regardless of the pressure exerted onto the pedal body 6. Thereto, in this example, the arcuate groove 16 may comprise a first section 26 which is in direct contact with the arcuate ridge 20 and a second section 28 which is positioned at a distance of the arcuate ridge 20, for allowing the film of grease of predetermined thickness to be present.

It will be appreciated that the arcuate grooves 16, arcuate ridges 20 and arcuate surfaces 18,22 in combination with the grease form damping means 30 for damping the rotation about the second axis A₂. Alternative damping means are also possible, such as resilient elements, such as mechanical springs or elastomeric elements, or gas and/or oil filled damper cylinders.

The inventor realised that the amount of damping may be optimized. Preferably, the damping means are arranged for allowing a rotation of the pedal body 6 about the second axis A₂ with respect to the pedal axis 2 at a translational velocity of the pedal body of 0.001 m/s - 0.015 m/s in the tangential direction when a force of 10N is applied to the pedal body in a direction tangential to the direction of rotation about the second axis A₂. It has been found that these translational velocities provide very good stability of the pedal.

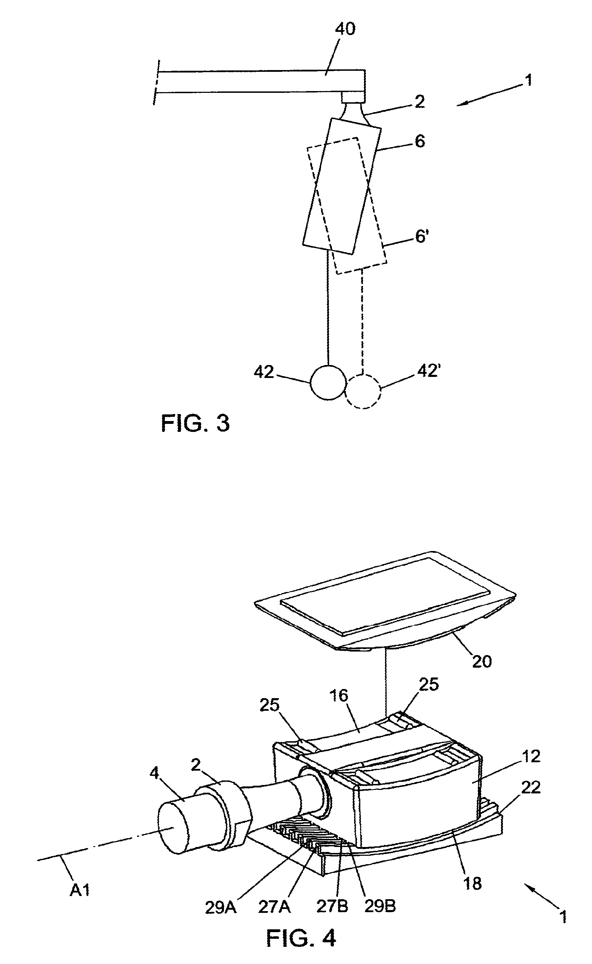

Fig. 3 shows a schematically representation of a set-up for measuring the translational velocity. The pedal 1 is suspended from a frame 40 in a substantially vertical orientation. Thereto, the pedal axle 2 is attached to the frame 40. A weight 42 is attached to the pedal body 6. The pedal body 6 is brought in the now uppermost position. Once the weight 42 is released, the weight 42 will drag the pedal body 6 downwards. It will be appreciated that after an initial acceleration of the pedal body, the pedal body will attain a constant translational velocity along its arcuate path. The translational velocity of the pedal body 6 along the arcuate path can now be determined, for instance using image processing of digital video images. Finally, the pedal body and weight will end up in their lowermost position (drawn in phantom and indicated with 6' and 42' respectively).

The grease, for instance the viscosity of the grease, the width of the film of the grease, the length of the film of the grease and/or the thickness of the film of the grease may be chosen such that the translational velocity of the pedal body is between 0.001 m/s and 0.015 m/s in the tangential direction when a force of 10N is applied to the pedal body in a direction tangential to the direction of rotation about the second axis A₂, i.e. if the weight is selected to yield a downward force of 10N (at approximately 1 kg). Preferably, the grease, for instance the viscosity of the grease, the width of the film of the grease, the length of the film of the grease and/or the thickness of the film of the grease may be chosen such that said translational velocity of the pedal body is between 0.001 m/s and 0.015 m/s in the range of -10°C to 60°C. It will be appreciated that simple experimentation, e.g. using the set-up shown in Fig. 3, will allow a suitable viscosity of the grease, width of the film of the grease, length of the film of the grease and/or thickness of the film of the grease to be determined.

Fig. 4 shows a schematic representation of a further embodiment of a bicycle pedal 1 according to the invention. In Fig. 4 the pedal body 6, has not been drawn for clarity. In Fig. 4 the pedal 1 comprises a roller bearing construction for allowing the rotation about the second axis A₂. Thereto, rollers 25 are interposed between the arcuate ridge 20 and the arcuate groove 16. In this example four rollers are used. It is noted that the arcuate ridge 20 and the arcuate groove 16 comprise recessed sections at the location of the rollers. These recesses allow the remainder of the arcuate ridge 20 and the arcuate groove 16 to be closer together, for instance for reducing a thickness of a film of grease present there between.

In the example of Fig. 4, the arcuate surfaces 16 18 and 22 shown in comprise a plurality of mutually cooperating longitudinal grooves 27A,27B and ridges 29A,29B extending tangentially about the second axis A₂ for increasing the damping of a grease between the respective arcuate surfaces. It will be appreciated that it is also possible that the arcuate surfaces 16 and 20 comprise such plurality of mutually cooperating longitudinal grooves and ridges.

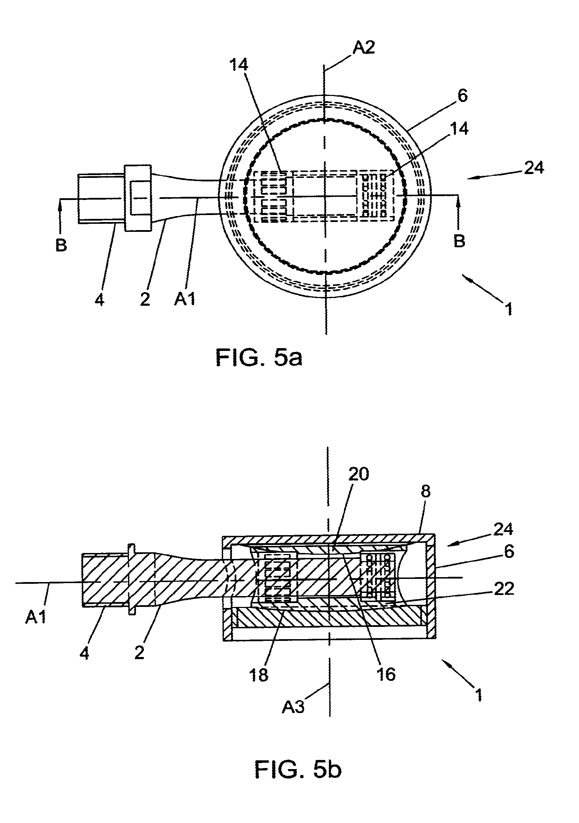

Figs. 5a and 5b show a schematic representation of an even further embodiment of a bicycle pedal 1 according to the invention. In this example, the arcuate surfaces 16,18,20 and 22 have been designed as spherical surfaces 16,18,20,22. This provides the advantage that the connection means 24 connect the pedal body 6 to the pedal axle 2, such that the pedal body 6, while cycling, can also freely rotate with respect to the pedal axle 2 about a third axis A₃ extending substantially perpendicular to the actuation surface 8.

With respect to Fig. 4 a plurality of mutually cooperating grooves 27A,27B and ridges 29A,29B has been described. It is also possible that the arcuate surfaces 16 and 20 and/or 18 and 22 shown in Figs. 1a, 1b, 1c and 2 comprise a plurality of such mutually cooperating longitudinal grooves and ridges extending tangential about the second axis for increasing the damping of a grease between the respective arcuate surfaces.

In the examples, the pedal is free from fixing means for fixing the rotation about the second axis. This provides the advantage that in use, during peal stroke, the pedal body 6 may adapt its instantaneous orientation to the desired orientation of the foot. It will be appreciated that damping may improve the stability of the pedal.

In the foregoing specification, the invention has been described with reference to specific examples of embodiments of the invention. It will, however, be evident that various modifications and changes may be made therein without departing from the scope of the invention as set forth in the appended claims.

In the example of Fig. 2 the arcuate groove 16 comprises the first section 26 and the second section 28. It will be appreciated that alternatively, or additionally, the arcuate ridge 20, the arcuate surface 18 and/or the arcuate surface 22 may be provided with a first and second section, to the same result. It will be appreciated that the pedal shown in Figs. 1a-1c may also comprise such first section 26 and second section 28.

In the example of Fig. 2 the pedal body 6 is provided with a locking mechanism 50 for securing the pedal to a cycling shoe. Hence, in Fig. 2 the pedal 1 is designed as a clipless bicycle pedal or automatic bicycle pedal. It will be appreciated that alternative locking mechanisms are possible.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Bicycle pedal comprising a pedal axle for connection to a crank of a bicycle, a pedal body comprising at least one actuation surface for actuating the pedal, and connection means,
wherein the connection means connect the pedal body to the pedal axle, such that the pedal body, while cycling, can freely rotate with respect to the pedal axle about a first axis extending substantially parallel to the pedal axle, and a second axis extending substantially perpendicular to the pedal axle and substantially parallel to the actuation surface, and
**characterized in that**
the second axis is located at a distance from, and in use above, the actuation surface.

2. Bicycle pedal according to claim 1, wherein the distance is between approximately 5 and 18 cm, preferably approximately 9 cm.

3. Bicycle pedal according to claim 1 or 2, further comprising damping means for damping the rotation about the second axis.

4. Bicycle pedal according to claim 3, wherein the damping means comprise a pair of opposed arcuate surfaces forming a slit there between, wherein the slit comprises a damping substance, such as a grease.

5. Bicycle pedal according to claim 3 or 4, wherein the damping means are arranged for allowing a translation of the pedal body with respect to the pedal axis at a rate of 0.001 m/s - 0.015 m/s when a force of 10N is applied to the pedal body in a direction tangential to the direction of rotation about the second axis.

6. Bicycle pedal according to any one of the preceding claims, comprising a roller bearing construction for allowing the rotation about the second axis.

7. Bicycle pedal according to claim 6 and any one of claims 3-5, wherein rollers are interposed between a first arcuate surface and a second arcuate surface of the arcuate surfaces.

8. Bicycle pedal according to any one of the preceding claims, wherein the connection means connect the pedal body to the pedal axle, such that the pedal body, while cycling, can freely rotate with respect to the pedal axle about a third axis extending substantially perpendicular to the actuation surface.

9. Bicycle pedal according to any one of the preceding claims, wherein the pedal body is designed as a sealed enclosure enclosing the connection means.

10. Bicycle pedal according to any one of the preceding claims, wherein the pedal body comprises a locking mechanism for securing the pedal to a cycling shoe.

11. Bicycle pedal according to any one of the preceding claims, wherein the pedal is free from fixing means for fixing the rotation about the second axis.

12. Bicycle comprising a pedal according to any one of the preceding claims.

## Patentansprüche

1. Fahrradpedal, umfassend eine Pedalachse zur Verbindung mit einer Kurbel eines Fahrrads, einen Pedalkörper, umfassend mindestens eine Betätigungsfläche zum Betätigen des Pedals, und Verbindungsmittel,
wobei die Verbindungsmittel den Pedalkörper mit der Pedalachse so verbinden, dass der Pedalkörper beim Fahrradfahren in Bezug auf die Pedalachse um eine erste Achse, die im Wesentlichen parallel zu der Pedalachse verläuft, und eine zweite Achse, die im Wesentlichen senkrecht zu der Pedalachse und im Wesentlichen parallel zu der Betätigungsfläche verläuft, frei drehen kann, und
**dadurch gekennzeichnet, dass** die zweite Achse in einem Abstand von und bei Verwendung über der Betätigungsfläche angeordnet ist.

2. Fahrradpedal nach Anspruch 1, wobei der Abstand zwischen 5 und 18 cm, bevorzugt ungefähr 9 cm, beträgt.

3. Fahrradpedal nach Anspruch 1 oder 2, ferner umfassend Dämpfungsmittel zum Dämpfen der Drehung um die zweite Achse.

4. Fahrradpedal nach Anspruch 3, wobei die Dämpfungsmittel ein Paar gegenüberliegende gebogene Flächen, die einen Schlitz dazwischen bilden, umfassen, wobei der Schlitz eine Dämpfungssubstanz wie beispielsweise Fett umfasst.

5. Fahrradpedal nach Anspruch 3 oder 4, wobei die Dämpfungsmittel angeordnet sind, um eine Übersetzung des Pedalkörpers in Bezug auf die Pedalachse mit einer Rate von 0,001 m/s - 0,015 m/s zu erlauben, wenn in einer Richtung tangential zur Drehrichtung um die zweite Achse eine Kraft von 10N auf den Pedalkörper ausgeübt wird.

6. Fahrradpedal nach einem der vorhergehenden Ansprüche, umfassend eine Rollenlagerkonstruktion, um die Drehung um die zweite Achse zu erlauben.

7. Fahrradpedal nach Anspruch 6 und einem der Ansprüche 3-5, wobei Rollen zwischen eine erste gebogene Fläche und eine zweite gebogene Fläche der gebogenen Flächen eingeschoben sind.

8. Fahrradpedal nach einem der vorhergehenden Ansprüche, wobei die Verbindungsmittel den Pedalkörper mit der Pedalachse so verbinden, dass der Pedalkörper beim Fahrradfahren in Bezug auf die Pedalachse um eine dritte Achse, die im Wesentlichen senkrecht zu der Betätigungsfläche verläuft, frei drehen kann.

9. Fahrradpedal nach einem der vorhergehenden Ansprüche, wobei der Pedalkörper als eine abgedichtete Einfassung, welche die Verbindungsmittel einschließt, ausgebildet ist.

10. Fahrradpedal nach einem der vorhergehenden Ansprüche, wobei der Pedalkörper einen Verriegelungsmechanismus zur Sicherung des Pedals an einem Fahrradschuh umfasst.

11. Fahrradpedal nach einem der vorhergehenden Ansprüche, wobei das Pedal frei von Befestigungsmitteln zur Befestigung der Drehung um die zweite Achse ist.

12. Fahrrad, umfassend ein Pedal nach einem der vorhergehenden Ansprüche.

## Revendications

1. Pédale de bicyclette comprenant un axe de pédale pour le raccordement à une manivelle d'une bicyclette, un corps de pédale comprenant au moins une surface d'actionnement pour actionner la pédale, et des moyens de raccordement,
dans laquelle les moyens de raccordement raccordent le corps de pédale à l'axe de pédale, de sorte que le corps de pédale, lors de l'utilisation de la bicyclette, puisse tourner librement par rapport à l'axe de pédale autour d'un premier axe s'étendant de façon sensiblement parallèle à l'axe de pédale, et un deuxième axe s'étendant de façons sensiblement perpendiculaire à l'axe de pédale et sensiblement parallèle à la surface d'actionnement, et
**caractérisée en ce que**
le deuxième axe est situé à une distance de, et, durant l'utilisation, au-dessus de, la surface d'actionnement.

2. Pédale de bicyclette selon la revendication 1, dans laquelle la distance est entre approximativement 5 et 18 cm, de préférence approximativement 9 cm.

3. Pédale de bicyclette selon la revendication 1 ou 2, comprenant en outre des moyens d'amortissement pour amortir la rotation autour du deuxième axe.

4. Pédale de bicyclette selon la revendication 3, dans laquelle les moyens d'amortissement comprennent une paire de surfaces arquées opposées formant une fente entre celles-ci, dans laquelle la fente comprend une substance d'amortissement, telle qu'une graisse.

5. Pédale de bicyclette selon la revendication 3 ou 4, dans laquelle les moyens d'amortissement sont agencés pour permettre une translation du corps de pédale par rapport à l'axe de pédale à une vitesse de 0,001 m/s à 0,015 m/s lorsqu'une force de 10 N est appliquée sur le corps de pédale dans une direction tangentielle à la direction de rotation autour du deuxième axe.

6. Pédale de bicyclette selon une quelconque des revendications précédentes, comprenant une construction de palier à roulements pour permettre la rotation autour du deuxième axe.

7. Pédale de bicyclette selon la revendication 6 et une quelconque des revendications 3 à 5, dans laquelle des roulements sont interposés entre une première surface arquée et une seconde surface arquée des surfaces arquées.

8. Pédale de bicyclette selon une quelconque des revendications précédentes, dans laquelle les moyens de raccordement raccordent le corps de pédale à l'axe de pédale, de sorte que le corps de pédale, lors de l'utilisation de la bicyclette, puisse librement tourner par rapport à l'axe de pédale autour d'un troisième axe s'étendant de façon sensiblement perpendiculaire à la surface d'actionnement.

9. Pédale de bicyclette selon une quelconque des revendications précédentes, dans laquelle le corps de pédale est conçu sous forme d'enceinte fermée enfermant les moyens de raccordement.

10. Pédale de bicyclette selon une quelconque des revendications précédentes, dans laquelle le corps de pédale comprend un mécanisme de verrouillage pour fixer la pédale à une chaussure de cyclisme.

11. Pédale de bicyclette selon une quelconque des revendications précédentes, dans laquelle la pédale est dépourvue de moyens de fixation pour fixer la rotation autour du deuxième axe.

12. Bicyclette comprenant une pédale selon une quelconque des revendications précédentes.
